# EUROPEAN PATENT SPECIFICATION

(11) **EP 1 700 780 B1**
(45) Date of publication and mention of the grant of the patent: **21.05.2008**
(21) Application number: 05005165.5
(22) Date of filing: 09.03.2005
(51) Int. Cl.: B62L 5/10, B62M 11/18

(54) **Internal hub transmission with a coaster brake for a go-cart**
Antriebsnabe mit Bremse für ein Go-Kart
Moyeu d'entraînement avec un frein pour voiture à pédale

(43) Date of publication of application: 13.09.2006
(73) Proprietor: SHIMANO INC., Osaka 590-8577 (JP)
(72) Inventor: Okamoto, Tatsushi, Shimonoseki, Yamaguchi, 750-1101 (JP)
(74) Representative: Hofmann, Harald

(56) References cited:
- EP-A- 0 795 462
- DE-A1- 3 537 851
- GB-A- 350 878
- US-A- 2 764 270
- US-A- 4 727 965
- US-A- 5 064 035

## Description

The present invention relates to an internal transmission with a coaster brake for a vehicle such as a go-cart (3-wheels or 4-wheel vehicle for children), and in particular to an internal transmission with a coaster brake that can go forward with 3 speeds and go backward with 1 speed as defined in the preamble of independent patent claim 1.

Hub internal transmissions have been know in the prior art for some time. For example, document US 3,937,309 discloses an internal hub including a hub axle, a drive member rotatably mounted around the hub axle, a hub body rotatably mounted around the hub axle, and a planetary gear mechanism coupled between the drive member and the hub body for communicating rotational force from the drive member to the hub body through multiple rotational force transmission paths. The planetary gear mechanism includes a planet gear supported by a planet gear rack for rotation around the hub axle, and a ring gear engaging the planet gear. The transmission provides three speeds depending upon the axial position of a clutch unit that is coupled to a driving member. More specifically, a high speed is provided when the clutch is linked to the gear rack such that the forward rotational power from the driver is transmitted from the planet gear attached to the gear rack to the hub body via the ring gear. A medium speed is provided when the clutch body is linked to the ring gear and the forward rotational power from the driver is transmitted from the ring gear directly to the hub body. A low speed is provided when the clutch body is linked to the ring gear and the forward rotational power from the driver is transmitted to the hub body through the ring gear, the planet gear, and the gear rack.

Such transmissions as described above usually include a coaster brake unit, wherein the reverse rotational power from the driver causes a brake cone provided on the gear rack to move in the axial direction. This movement of the brake cone in the axial direction causes a brake shoe to expand, thus producing a braking force.

Document EP0795462 discloses a hub transmission with a coaster brake unit including a hub axle, a drive member rotatably mounted around the hub axle, a hub body rotatably mounted around the hub axle, and a planetary gear mechanism coupled between the drive member and the hub body for communicating rotational force from the drive member to the hub body through multiple rotational force transmission paths.
A ball bearing mechanism is provided between the hub body and a brake arm that is fixed to the hub axle. When the pedal is rotated backward for braking, an engagement component that is in contact with the side surface of the depression transmits the reverse rotational power to the gear rack and actuates the roller brake. Accordingly, the braking force of the hub transmission with a coaster brake unit applied to the wheels is the same regardless of the selected transmission path.

According to those prior art documents, the hub transmission with a coaster brake unit is connected to the frame via a free wheel that does not transmit backward rotational power to the frame. Accordingly, the go-cart (3-wheels or 4-wheel vehicle) cannot go to backward.

To solve this problem, current hub transmissions with a coaster brake unit for a go-cart, further comprise a free gear fixable to the frame of the go-cart, a one way clutch between the brake cup and the free gear, wherein the one way clutch is structured for transmitting a reverse rotational force from the brake cup to the outer free gear, and a friction element fixed to the free gear or free wheeling gear, biased towards the side surface of the brake cup to provide a constant frictional force onto the braking cup. More precisely, the friction element is shaped like an "M" or "W", both ends of the friction element being fixed to the free gear, and at least two points towards the centre of the friction element biased onto the side surface of the brake cone.

A hub transmission according to the preamble of claim 1 is disclosed in document DE 3537851.

It has shown, however, that in these current hub transmissions with a coaster brake unit for go-carts, the frictional power between the brake cup and the free gear is not sufficient, as, when the pedal of the go-cart is rotated backward to back the vehicle up, the brake cone turns free and does not turn relative to the free gear. Accordingly, the go-cart does not go backward. This problem gets even worse, when the friction element and the brake cup are wet, and / or worn.

Accordingly, it is an object of the present invention to provide an internal hub transmission with a coaster brake for a vehicle that can forward and can go backwards reliably.

This problem is solved by means of the features as contained in independent patent claim 1, while useful and advantageous embodiments are described by means of the features contained in the dependent claims.

Provided is an internal hub transmission with a coaster brake comprising a hub axle, a drive member rotatably mounted around the hub axle, a hub body rotatably mounted around the hub axle, a planetary gear mechanism coupled between the drive member and the hub body for communicating the rotational force from the drive member to the hub body through multiple rotational paths, a coaster brake unit having at least a roller brake, wherein a reverse rotational force from the drive member causes the roller brake to extend, thus producing a brake action, a brake cup carrying an inner free gear or inner portion of a free wheeling gear, an outer free gear or outer portion of said free wheeling gear fixable to the frame of the vehicle, and a one way clutch between the inner free gear and outer free gear, wherein the one way clutch is structured for transmitting a reverse rotational force from the inner free gear to the outer free gear, wherein according to the invention a friction element, fixed to the outer free gear, is provided on, and enclosing a substantial part of the circumference of the brake cup. By providing the friction element on the braking cup in a way that it encloses a substantial part of the circumference of the latter, a much bigger and thus more reliable frictional force can be produced, without any need to provide more bias force in the friction element itself.

In a further embodiment, the friction element can have the form of a loop enclosing substantially the circumference of the brake cup, wherein the loop can furthermore be open and biased towards the brake cup, wherein the opening in the loop preferably is positioned adjacent to fixation to the outer free gear in the backward rotational direction of the hub transmission, so that the friction element wrings the braking cup when it rotates.

Furthermore, the hub transmission as described above can be provided with a circumferential groove on the brake cup for receiving the friction element, to further enhance the friction between the friction element and the braking cup, and to better protect it from environmental influences such as humidity, water, dirt, and others that can be detrimental to the reliability of the friction element.

In a further preferred embodiment, the friction element is fixed to the outer free gear by means of a cantilevered element engaging the outer free gear at a single point, which makes the construction simple and easy to use, because it has to be brought into engagement with only a single point of contact on the free gear.

Preferably, the friction element is a single piece, made from a metal wire, wherein the metal wire can either have a circular cross section, a rectangular cross section, or any other cross section that appears to be useful in the particular set up of the internal hub transmission. Further preferred, the metal wire consists of spring steel, to provide it with the necessary elasticity to wring the

Finally, it is preferred that the friction element is located on the hub side of the outer free gear to further protect it from water and dirt, and thus enhance its reliability.

Further characteristics and advantages can be taken from the figures, showing a preferred embodiment of the present invention in a descriptive and non-limiting way, wherein:
- Fig. 1: is a partial cross sectional view of a particular embodiment of an internally mounted hub transmission including a coaster brake unit; and
- Fig. 2: is a partial perspective view of the internally mounted hub transmission according to Fig. 1.

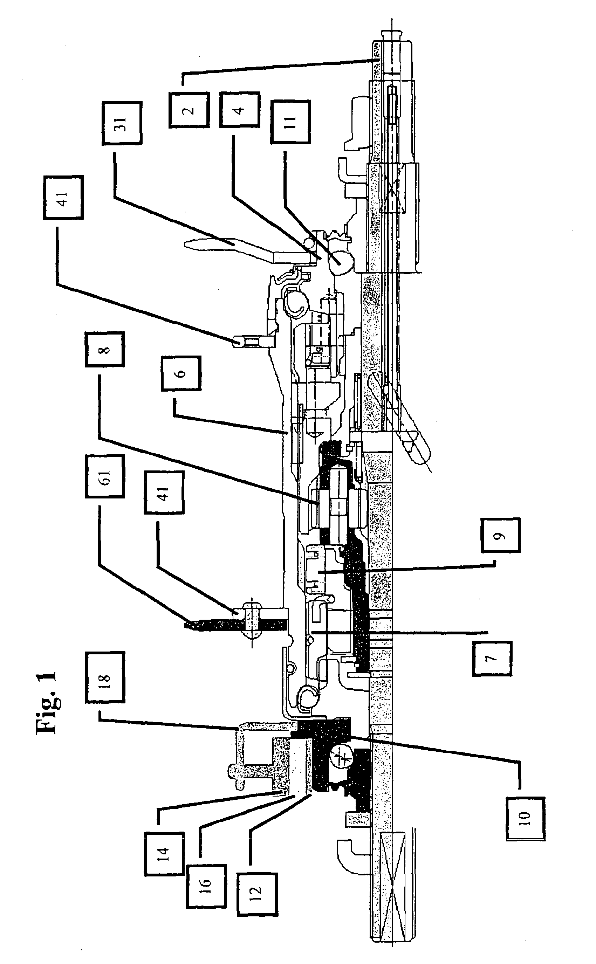

Figure 1 is a partial cross sectional view of a particular embodiment of an internally mounted hub transmission, which includes a coaster brake unit according to the present invention. The transmission comprises a hub axle 2 that can be fixed to a go-cart frame, a driver 4 and a hub body 6 that are supported rotatably by the hub axle 2, a planet gear mechanism 8 that transmits power between the driver 4 and the hub body 6, and a roller brake 9, which itself is known as a coaster brake unit.

The driver 4, which functions as the input component for this internal hub transmission 1, has provided around its outer peripheral surface a sprocket 31 that receives the power transmitted by a chain. Further, the internal hub transmission is equipped with a first ball bearing mechanism 11 between the driver 4 and the hub axle 2.

The hub body 6, which functions as the output component for this internal hub transmission, has formed around its outer peripheral surface a pair of hub flanges 41 to the left of which a second sprocket 61 is fixed to drive a second chain driving the axle between the wheels of the go-cart. Further, the internal hub transmission is equipped with a second ball bearing mechanism 13 between the hub body 6 and the driver 4.

When the pedal of the go-cart is rotated backward an engagement component transmits the reverse rotational power to the gear rack 8 and cause to rotate backward the roller brake 7.

A brake cup 10 carries the roller brake 7 and the inner free gear 12, an outer free gear 14, and a one-way clutch 16 in between. The outer free gear 14 is fixable to the frame of the vehicle, and the one-way clutch 16 is structured for transmitting a reverse rotational force from the brake cup 10 to the outer free gear 14. As a result, the roller brake 7 transmits the reverse rotational power to the hub body 6 and the vehicle can go backward.

However, if there is not enough friction power between the brake cup 10 and the inner free gear 12, the brake cup 10 turns free and gets round nowhere relative to the free gear as the frame. As a result, the vehicle cannot go back forward. To solve this problem, a friction element 18, fixed to the outer free gear 14, is provided on, and enclosing a substantial part of the circumference of the brake cup 10 to enhance the frictional force between the free gear and the brake cup 10. As can be taken from Fig. 1, the friction element 18 has a cantileverd fixation element 20 coming into engagement with the outer free gear 14 at a single point only.

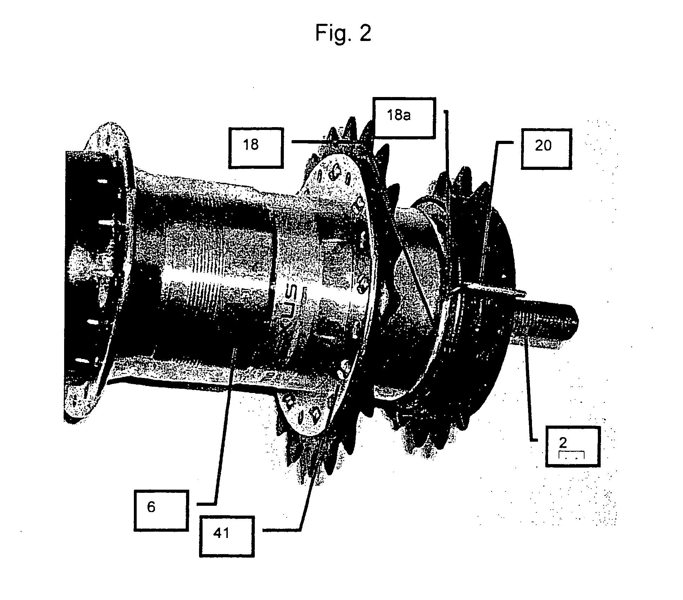

Fig. 2 is a partial perspective view of the internal hub transmission according to Fig. 1, wherein the same parts as in Fig. 1 are provided with the same reference signs too. What is particularly well visible is the friction element 18 with the cantilevered fixation element 20 coming into engagement with the outer free gear 14, which in this embodiment is provided with a sprocket, wherein the cantilevered fixation element 20 is positioned between two teeth of the sprocket.

As can be seen in Fig. 2, the friction element has the form of a loop enclosing substantially the circumference of the brake cup 10, wherein the loop in this embodiment has an opening 18a and is biased towards the brake cup, wherein the opening in the loop is positioned adjacent to the fixation 20 to the outer free gear 14 in the backward rotational direction of the hub transmission, so that the friction element 18 wrings the braking cup when it rotates.

In the embodiment as shown in Fig. 2, the friction element 18 is a single piece, made from a metal wire, wherein the metal wire has a circular cross section, and consists of spring steel, to provide it with the necessary elasticity to wring the braking cup.

Finally, according to the embodiment as shown in Fig. 2, the friction element 18 is located on the hub side of the outer free gear 14 to further protect it from water and dirt, and thus enhance its reliability.

## Claims

1. A hub transmission for use in a vehicle, the hub transmission comprising
a hub axle (2),
a drive member (4) rotatably mounted around the hub axle (2),
a hub body (6) rotatably mounted around the hub axle (2),
a planetary rear mechanism (8) coupled between the drive member (4) and the hub body (6) for communicating rotational force from the drive member (4) to the hub body (6) through multiple rotational paths,
a coaster brake unit having at least a roller brake (7),a reverse rotational force from the drive member (4) causing the roller brake (7) to extend and thus produce a brake action,
a brake cup (10) carrying an inner portion (12) of a free wheeling gear, and
a one way clutch (16) between the inner (12) and an outer (14) portion, wherein the one way clutch (16) is structured for transmitting a reverse rotational force from the inner (12) to the outer portion (14) of said free wheeling gear,
**characterized in that**
the outer portion (14) of said free wheeling gear is fixable to the frame of the vehicle, and
a friction element (18), fixed to the outer portion (14) of said free wheeling gear, is provided on, and enclosing a substantial part of the circumference of the brake cup (10).

2. The hub transmission according to claim 1, **characterised in that** the friction element is in the form of a loop enclosing substantially the circumference of the brake cup.

3. The hub transmission according to claim 2, **characterised in that** the loop is open and biased towards the brake cup.

4. The hub transmission according to claim 3, **characterised in that** the opening in the loop is positioned adjacent to the fixation to the outer portion of said free wheeling gear in the backward rotational direction of the hub transmission.

5. The hub transmission according to claim 3, **characterised in that** a circumferential groove is provided on the brake cup for receiving the friction element.

6. The hub transmission according to any of the preceding claims, **characterised in that** the friction element (18) is fixed to the outer portion of said free wheeling gear by means of an cantilevered element engaging the outer portion of said free wheeling gear at a single point.

7. The hub transmission according to any of the preceding claims, **characterised in that** the friction element (18) is a single piece, made from a metal wire.

8. The hub transmission according to claim 7, **characterised in that** the metal wire has circular cross section.

9. The hub transmission according to claim 8, **characterised in that** the metal wire has rectangular cross section.

10. The hub transmission according to any of claims 8 to 10, **characterised in that** the metal wire consists of spring steel.

11. The hub transmission according to any of claims 1 to 11 **characterised in that** the friction element (18) is located on the hub side of the outer portion of said free wheeling gear.

## Patentansprüche

1. Nabengetriebe zur Verwendung bei einem Fahrzeug, wobei das Nabengetriebe folgendes umfasst:
eine Nabenachse (2),
ein Antriebsteil (4), das drehbar bezüglich der Nabenachse (2) montiert ist,
einen Nabenkörper (6), der drehbar bezüglich der Nabenachse (2) montiert ist,
einen hinteren Planetengetriebemechanismus (8), der zwischen dem Antriebsteil (4) und dem Nabenkörper (6) zur Übertragung von Drehkraft von dem Antriebsteil (4) zu dem Nabenkörper (6) durch mehrere Drehpfade gekoppelt ist,
eine Rücktrittbremseinheit mit zumindest einer Rollenbremse (7), wobei eine Rückwärtsdrehkraft von dem Antriebteil (4) die Rollenbremse (7) veranlasst, sich zu weiten und somit eine Bremswirkung zu erzeugen,
einen Bremsbecher (10), der einen inneren Abschnitt (12) eines Freilaufmechanismus trägt, und
eine Einwegkupplung (16) zwischen dem inneren und einem äußeren Abschnitt (12, 14), wobei die Einwegkupplung (16) zum Übertragen einer Rückwärtsdrehkraft von dem inneren zu dem äußeren Abschnitt (12, 14) des Freilaufmechanismus ausgebildet ist,
**dadurch gekennzeichnet, dass**
der äußere Abschnitt (14) des Freilaufmechanismus an dem Rahmen des Fahrzeugs festlegbar ist, und dass ein Friktionselement (18), das an dem äußeren Abschnitt (14) des Freilaufmechanismus festgelegt ist, einen wesentlichen Teil des Umfangs des Bremsbechers (10) umgibt und an diesem bereitgestellt ist.

2. Nabengetriebe gemäß Anspruch 1, **dadurch gekennzeichnet, dass** das Friktionselement in Form einer Schleife ausgebildet ist, im Wesentlichen den Umfang des Bremsbechers umgebend.

3. Nabengetriebe gemäß Anspruch 2, **dadurch gekennzeichnet, dass** die Schleife offen ist und zu dem Bremsbecher hin beaufschlagt ist.

4. Nabengetriebe gemäß Anspruch 3, **dadurch gekennzeichnet, dass** die Öffnung in der Schleife zu der Festlegung an dem äußeren Abschnitt des Freilaufmechanismus benachbart bezüglich der Rückwärtsdrehrichtung des Nabengetriebes positioniert ist.

5. Nabengetriebe gemäß Anspruch 3, **dadurch gekennzeichnet, dass** eine Umfangsnut am Bremsbecher zur Aufnahme des Friktionselements bereitgestellt ist.

6. Nabengetriebe gemäß einem der vorherigen Ansprüche, **dadurch gekennzeichnet, dass** das Friktionselement (18) an dem äußeren Abschnitt des Freilaufmechanismus festgelegt ist, mittels eines Auslegerelements, das mit dem äußeren Abschnitt des Freilaufmechanismus an einem einzigen Punkt in Eingriff steht.

7. Nabengetriebe gemäß einem der vorherigen Ansprüche, **dadurch gekennzeichnet, dass** das Friktionselement (18) einstückig ist, hergestellt aus einem Metalldraht.

8. Nabengetriebe gemäß Anspruch 7, **dadurch gekennzeichnet, dass** der Metalldraht einen kreisförmigen Querschnitt aufweist.

9. Nabengetriebe gemäß Anspruch 8, **dadurch gekennzeichnet, dass** der Metalldraht einen rechteckförmigen Querschnitt aufweist.

10. Nabengetriebe gemäß einem der Ansprüche 8 bis 9, **dadurch gekennzeichnet, dass** der Metalldraht aus Federstahl besteht.

11. Nabengetriebe gemäß einem der Ansprüche 1 bis 10, **dadurch gekennzeichnet, dass** das Friktionselement (18) an der Nabenseite des äußeren Abschnitts des Freilaufmechanismus angeordnet ist.

## Revendications

1. Moyeu d'entraînement pour une utilisation dans un véhicule, le moyeu d'entraînement comprenant
- un essieu de moyeu (2),
- un organe d'entraînement (4), monté de façon rotative autour de l'essieu de moyeu (2),
- un corps de moyeu (6), monté de façon rotative autour de l'essieu de moyeu (2),
- un mécanisme planétaire arrière (8), couplé entre l'organe d'entraînement (4) et le corps de moyeu (6), pour communiquer une force de rotation en provenance de l'organe d'entraînement (4) vers le corps de moyeu (6), par l'intermédiaire de chemins de rotation multiples,
- une unité de frein à contre-pédalage ayant au moins un frein à rouleau (7), une force de rotation inverse en provenance de l'organe d'entraînement (4) amenant le frein à rouleau (7) à s'étendre et produire ainsi une action de freinage,
- une coupelle de frein (10) portant une partie interne (12) d'un élément de roue libre, et
- un embrayage unidirectionnel (16) entre la partie interne (12) et une partie externe (14), dans lequel l'embrayage unidirectionnel (16) est structuré pour transmettre une force de rotation inverse de la partie interne (12) vers la partie externe (14) de l'élément de roue libre,
**caractérisé en ce que**,
la partie externe (14) de l'élément de roue libre peut être fixée sur le cadre du véhicule, et un élément de friction (18), fixé sur la partie externe (14) de l'élément de roue libre, est fourni sur et entoure une partie substantielle de la circonférence de la coupelle de frein (10).

2. Moyeu d'entraînement selon la revendication 1, **caractérisé en ce que** l'élément de friction a la forme d'une boucle entourant sensiblement la circonférence de la coupelle de frein.

3. Moyeu d'entraînement selon la revendication 2, **caractérisé en ce que** la boucle est ouverte et biaisée vers la coupelle de frein.

4. Moyeu d'entraînement selon la revendication 3, **caractérisé en ce que** l'ouverture dans la boucle est positionnée adjacente à la fixation à la partie externe de l'élément de roue libre, dans la direction de rotation arrière du moyeu d'entraînement.

5. Moyeu d'entraînement selon la revendication 3, **caractérisé en ce qu'**une rainure circonférentielle est fournie sur la coupelle de frein, pour recevoir l'élément de friction.

6. Moyeu d'entraînement selon l'une quelconque des revendications précédentes, **caractérisé en ce que** l'élément de friction (18) est fixé sur la partie externe de l'élément de roue libre, au moyen d'un élément de levier en prise, au niveau d'un point unique, avec la partie externe de l'élément de roue libre.

7. Moyeu d'entraînement selon l'une quelconque des revendications précédentes, **caractérisé en ce que** l'élément de friction (18) est une pièce unique, faite d'un fil métallique.

8. Moyeu d'entraînement selon la revendication 7, **caractérisé en ce que** le fil métallique a une section transverse circulaire.

9. Moyeu d'entraînement selon la revendication 8, **caractérisé en ce que** le fil métallique a une section transverse rectangulaire.

10. Moyeu d'entraînement selon l'une quelconque des revendications 8 à 9, **caractérisé en ce que** le fil métallique est constitué d'acier en ressort.

11. Moyeu d'entraînement selon l'une quelconque des revendications 1 à 10, **caractérisé en ce que** l'élément de friction (18) est situé sur le côté de moyeu de la partie externe de l'élément de roue libre.
